# EUROPEAN PATENT APPLICATION

(11) **EP 4 664 840 A1**
(43) Date of publication of application: **17.12.2025**
(21) Application number: 24181343.5
(22) Date of filing: 11.06.2024
(51) Int. Cl.: H04L 41/142, G08G 5/00, H04L 41/147, H04L 41/16, H04L 43/08, H04L 41/0659

(54) **DISTRIBUTED COMMUNICATION AND MONITORING SYSTEM**

(71) Applicant: Rohde & Schwarz GmbH & Co. KG, 81671 München (DE)
(72) Inventor: Stein, Marco, 81829 Munich (DE); Schelkle, Martin, 81549 München (DE); Schoenauer, Stefan, 85276 Pfaffenhofen a. d. Ilm (DE)
(74) Representative: Isarpatent

(57) **Abstract**

The present invention relates to a distributed communication and monitoring system for a prediction-based operation and monitoring of a communication system, comprising: a communication system, the communication system comprising a monitoring module and at least one interface wherein the monitoring module is configured to monitor the communication system or parts thereof and to provide monitoring information; a computing center coupled to the interface of the communication system and comprising a prediction module, wherein the prediction module comprises a pre-trained model of the communication system, wherein the prediction module is configured to receive the monitoring information via the interface, to analyze the received monitoring information using the pre-trained model and to create a prediction model of the communication system based on the analyzed monitoring information; and a communication management unit coupled to the prediction module of the computing center via at least one back channel wherein the communication management unit is configured to receive prediction information of the created prediction model and to operate the communication system or parts thereof based on the receive prediction information.

## Description

### FIELD OF THE INVENTION

The present invention relates to a distributed communication and monitoring system for a prediction-based operation and monitoring of a communication system, in particular for operation and monitoring of an ATC-based communication system.

### TECHNICAL BACKGROUND

The present invention is in the field of Air Traffic Control (ATC). Today and for the foreseeable future, national Air Navigation Service Providers (ANSP) such as the Deutsche Flugsicherung (DFS) perform ATC tasks in order to ensure safe air traffic. For performing these ATC tasks, the ANSP employs specific technical systems (physical assets) consisting of various, mostly high sophisticated technical sub-systems such as voice/NF, VoIP, radio domains, etc.). The ANSP uses a complex monitoring/control subsystem for monitoring and maintaining these technical systems and their functionality and technical condition.

Against this background, the following observations can be made:
In order to increasingly reduce the overall costs, the ANSP are shifting towards IP-based systems. On the other hand, for the ANSP the technical complexity in general (and partly due to further spreading of IP-based services from the core to the edges) will more and more increase. This will require constant training of the monitoring/maintenance persons in order to be able to correctly interpret the information provided from the various monitoring/control subsystems. Further, technological shift to common, homogenous technologies/protocols creates IT security requirements. The ANSP may be confronted with these challenges in keeping up with the technological change and as a consequence of this observation may consider shifting the specific technical ANSP systems to the suppliers in order to reduce operating and capital expense.

In addition to that, due to several inherent properties and characteristics it is forseeable, that the usage of VHF AM-DSB (VHF = very high frequency; AM = amplitude modulation; DSB = double sideband) in ATC could be coming to an end soon.

CN 107818696 A describes an universal aircraft surveillance platform.

US 2019/0223023 A1 describes a system and method for an integrated virtual customer premises equipment.

US 10,154,538 B2 describes a communication system for speech communication.

### SUMMARY OF THE INVENTION

Against this background, there is a need to provide an improved, reliable operation in particular of ATC-based communication systems.

This object is solved according to the invention by a distributed communication and monitoring system having the features of independent claim 1.

Accordingly, a distributed communication and monitoring system for a prediction-based operation and monitoring of a communication system, in particular for operation and monitoring of an ATC-based communication system, is provided. The distributed communication and monitoring system comprises:
- a communication system, the communication system comprising a monitoring module and at least one interface wherein the monitoring module is configured to monitor the communication system or parts thereof and to provide monitoring information at the interface;
- a computing center coupled to the interface of the communication system and comprising a prediction module, wherein the prediction module comprises a pre-trained model of the communication system, wherein the prediction module is configured to receive the monitoring information via the interface, to analyze the received monitoring information using the pre-trained model and to create a prediction model of the communication system based on the analyzed monitoring information; and
- a communication management unit coupled to the prediction module of the computing center via at least one back channel wherein the communication management unit is configured to receive prediction information of the created prediction model and to control operation of the communication system or parts thereof based on the receive prediction information.

The present invention is based on the knowledge that there will be a constantly ongoing technological change in communication systems. This change is currently focused towards more scalable and open software that promise further opening of interfaces (such as the application programming interface, API) for information exchange between systems, and that are in particular focusing on strengthening software system's non-functional qualities such as reliability, availability, maintainability, redundancy, scalability, extendibility, etc. According to a further finding of the invention, the technological change will move more and more towards the use of cloud-based technologies since these cloud-based technologies are capable to meet said functional and non-functional requirements. The cloud-based technologies are further increasing the technical complexity therefore requiring even more technological knowledge and know-how yet, however, they promise a further decrease in operating and capital expenses which is of high value of users of such communication systems. Finally, it is clear that the information gap between a provider of such communication systems and users of such systems (such as the ANSP) must further decrease, so that the provider can obtain constant insights into the "provided" solution/service of the communication systems on the user side in order to enable constant improvement of the same.

It is now a key idea of the present invention to employ cloud-technology within a distributed communication and monitoring system in order to monitor, observe, improve as well as configure, manage, maintain communication systems, such as AT-basedcommuni-cation systems deployed at the ANSP. These communication and monitoring system according to the present invention provide value added information to the user (such as the ANSP) focused on the main value stream on user side, such as channel health, availability and quality by combining different device and/or system information and determine current situation and conditions. These value added information will increase situational awareness to the user.

Based on the collected information a prediction on possible further trend on key performance indicators of the communication systems or ATC systems will be possible. This value added information will also significantly reduce the information gap between the provider of such communication systems and their users by giving the providers somehow a "real-time" insight on the state and condition of the deployed communication systems and/or their equipment. At the end this is to the benefit of the users of those systems since these communication systems are made better protected by a fail-safe design.

In particular, this real-time insight is obtained through a secured/safe information back-channel from the communication system on the customer's premise to the cloud based on the provider's side.

Advantageous configurations and developments emerge from the further dependent claims and from the description with reference to the figures of the drawings.

According to a preferred embodiment, the monitoring module is configured to monitor predefined device functions, device conditions and/or operational parameters of the communication system (or parts thereof) and to provide the monitoring information thereof. The monitoring module may also monitor external conditions of the communication system, such as the temperature, humidity, weather conditions. The monitoring module additionally or alternatively monitors also a change of the monitored information over time.

In particular, the monitoring information comprises at least one of: temperature; operation runtime; performance data; voice quality; power consumption; output power; fan speed; transmission quality between the different stations or parts of the communications system. Other monitoring information may also possible and advantageous.

According to a typical configuration, the communication system comprises at least one of: a VCS simulation system; a radio frequency system; an IP based system; a radar system; a direction guiding system; a direction finding system; a voice quality system. It goes without saying that the communication system also comprise additional devices or systems.

According to a preferred embodiment, the interface of the communication system comprises at least one communication interface and/or at least one test interface. The communication interface is intended to exchange communication data. The exchange of data may be done unidirectional or bidirectional between the communication system and the computing center and/or communication management unit. The test interface serves test purposes and is intended to transmit test data or information from the communication system to the computing center and/or communication management system. Preferably, one and the same interface may be employed for communication and testing, however, also separate interfaces may be possible depending on the user needs and application.

According to a preferred embodiment, the computing center is a cloud-based data processing center. The cloud-based data processing center comprises a plurality of servers, computers or the like. The used cloud may be a so-called Escher Cloud which is a European cloud provider with AI infrastructure and which provides access to a high-performance compute architecture. Other privately owned and/or commercial cloud provider, such as Amazon Web Services (AWS), are also possible. In particular, for ATC based communication systems, however, the computing performance of the cloud-based data processing center must be powerful enough in order to be able to process the extensive computing tasks.

According to a typical configuration, the pre-trained model comprises a trained artificial neuronal network (ANN). The trained ANN is established and trained on the basis of previously provided monitoring information of the communication system and/or based on experience information of the communications system and/or parts thereof. These experience information are typically provided by the provider of such communications systems who know their systems, its properties and performance best.

Preferably, the trained ANN is trained based on machine learning techniques, in particular deep learning. Deep learning is a method of machine learning that uses ANNs with numerous hidden layers between the input layer and the output layer to create a comprehensive internal structure. Deep learning enables the processing and analysis of complex data patterns. Deep learning also uses deep hierarchical neural networks that automatically extract abstract features from the provided data. This enables efficient processing of complex information, which in turn leads to precise predictions and decisions in various applications.

According to a preferred embodiment, the prediction module is configured to constantly further train the ANN based on the received monitoring information. This way, the ANN is always adjusted on the existing situation and conditions of the communication system under test. In particular, the ANN is trained based on a correlation between former and present events.

According to a further preferred embodiment, the prediction module comprises a pattern detection module. The pattern detection module is configured to detect specific or predefined pattern in the received information. The specific or predefined pattern may be indicative of a predefined error, a failure condition and/or degeneration condition of the communications system under test or parts thereof. The specific or predefined pattern, however, may also be indicative for a correct and proper operating condition of the communication system.

Preferably, the pre-trained model of the communication system is stored in a specific memory of the computing center.

In some configurations, the computing center or at least some of its servers may be part of the communication system. In other preferable configurations, however, the computing center or at least some of its servers may be separate from the communication system under test and for example provided at the provider side of the communication system.

In a particular preferred configuration, the back channel is configured to enable a secured communication between the computing center and the communication management unit. The communication is preferably unidirectional, but may also be bidirectional. In communications systems, the back channel - also referred to as return channel, reverse channel or return link - is the transmission link from one user terminal to a central hub. Back channels are often, but not always, slower than the corresponding forward communication links. Examples where this is true include asymmetric digital subscriber lines, cable modems, mobile broadband and satellite internet access. The return channel need not use the same medium as the main channel. Even when the return and forward channels use the same medium, their differences often dictate the use of different data modulation and coding techniques.

In a further preferred configuration, the communication management unit is part of the communication system. However, the communication management unit may also be part of the computing center or may be a unit separate from the communication system and the computing center.

According to a preferred embodiment, the communication management unit is configured to analyze the created prediction model and to generate a warning information in case the created prediction model indicates a critical operational condition of the communication system under test or parts thereof within a predefined upcoming time period. The warning information may be provided to the user of the communication system, such as the ATC provider or ANSP. Additionally or alternatively, the warning information may also be provided to the provider of this communication system who then can take the necessary steps, such as performing an online update of the communication system or the respective parts. The service provider may also furnish the user of the communication system with a suitable exchange part.

According to another embodiment, the communication management unit is configured to automatically switch-off the communication system or the respective parts thereof after the predefined time period. This ensures that the respective part of the communication system does not fail during operation. However, it is compulsory that before the ultimate switching-off step, the user is informed of this situation and the scheduled switching-off. Further, this step should be used very carefully only for those parts of the communication system that are not vital or that are backed with a redundant system or device.

Where appropriate, the above-mentioned configurations and developments can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also ass individual aspects as improvements or supplements to the basic form of the present invention.

### BRIEF DESCRIPTION OF THE EMBODIMENTS

For a more comprehensive understanding of the invention and the advantages thereof, exemplary embodiments of the invention are explained in more detail in the following description with reference to the accompanying drawing figures, in which like reference characters designate like parts and in which:
- FIG. 1: illustrates a distributed communication and monitoring system according to a first embodiment of the present invention;
- FIG. 2: illustrates a distributed communication and monitoring system according to a second embodiment;
- FIG. 3: illustrates a distributed communication and monitoring system according to a third embodiment.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like functionally equivalent and identically operating elements, features and components are provided with like reference signs in each case, unless stated otherwise.

### DETAILED DESCRIPTION OF THE EMBODIMENTS

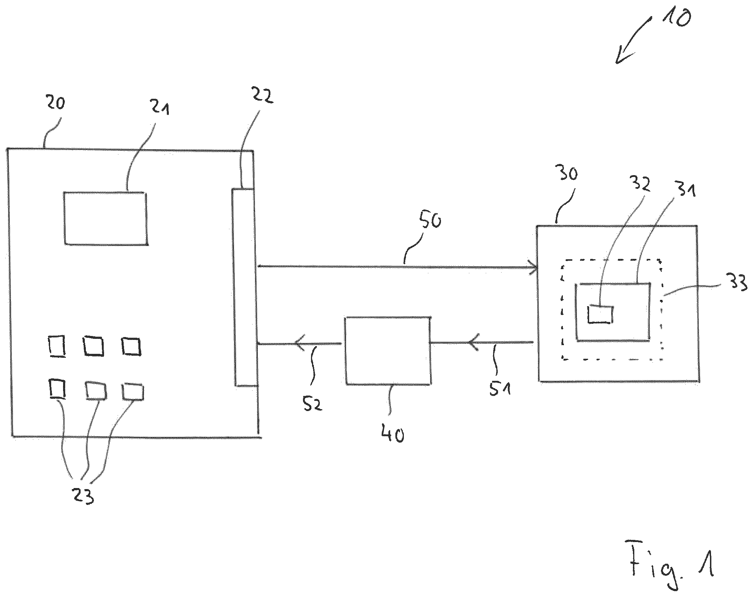

FIG. 1 illustrates a distributed communication and monitoring system according to a first embodiment of the present invention.

In Fig. 1, the distributed communication and monitoring system is denoted by reference numeral 10. The system 10 comprises a communication system 20, a computing center 30 and a communication management unit 40 that are coupled to each other via communications lines 50-52. The system 10 is configured to perform a monitoring and prediction-based operation of the communication system 20, which comprises according to a preferable embodiment one or more ATC centers for Air Navigation Service Providers (ANSP).

The communication system 20 consists of several subsystems, parts, devices and apparatuses 23 that are interconnected with each other (not shown in Fig. 1), such as in the case of an ATC-based communication system 20 one or more ATC centers, a tower control, a ground control, data centers, communication links (such as VHF, satellite communications (SATCOM), or high frequency datalink (HFDL) communication), voice communication links, etc. Generally, the communication system 20 may comprises at least one of: a VCS simulation system, a radio frequency system, an IP based system, a flight and/or ground radar, a direction guiding and/or finding system, a voice quality system, etc.

For monitoring and prediction purposes, the communication system 20 further comprises a monitoring module 21 and an interface 22. The monitoring module 21 is coupled to the different parts 23 of the communication system 20 and is configured to monitor their condition and operation mode. In particular, the monitoring module 21 is configured to monitor predefined device functions, device conditions and/or operational parameters of the different parts 23 of the communication system 20. The monitoring module 21 may also measure external conditions and bring them in correlation with the other measured or monitored parameters of the communication system 20.

Based on this monitoring, the monitoring module 21 provides monitoring information that are suitable to assess the technical condition and functionality of the parts 23 of the communication system 20. The monitoring information may comprise: surrounding temperature of the communication system 20, operating temperature of a part 23 of the communication system 20, operation runtime, performance information of a part 23 of the communication system 20, voice quality, power consumption of a part 23 of the communication system 20, output power, data and/or voice transmission quality, etc. Additionally, these information may be provided with a time stamp. The monitoring is made typically user-defined, e.g. continuously or after predefined time-periods.

The interface 22 comprises at least one communication interface, at least one control interface and/or at least one test interface.

The computing center 30 is coupled to the interface 22 and comprises one or more distributed and interlinked servers, computers or the like (not shown).

According to the present invention, the computing center 30 comprises a prediction module 31 which includes a pre-trained model 32 of the communication system 20. The prediction module 31 is configured to receive the monitoring information via the interface 22 and communication line 50. The prediction module 31 is further configured to analyze the received monitoring information using the pre-trained model 32and to create a prediction model of the communication system 20 based on the analyzed monitoring information.

The pre-trained model 32 comprises a trained artificial neuronal network (ANN) that is established and trained on previously provided monitoring information of the communication system 20, based on experience information of the communications system 20 and/or parts 23 thereof. The ANN is pre-trained and/or continuously trained based on machine learning techniques, such as deep learning.

The pre-trained model 32 of the communication system 20 is stored preferably locally in one or more memory devices 33 of the computing center 30.

The communication management unit 40 is coupled on its input side via at least one back channel 51 to the computing center 30 and in particular to its prediction module 31 and on its output side via control lines 52 to the communication system 20. The back channel preferably enables a secured communication between the computing center 30 and the communication management unit 40. The communication management unit 40 is configured to receive via the back channel 51 prediction information of the created prediction model and to operate the communication system 20 or parts 23 thereof based on the receive prediction information. For this purpose, the communication management unit 40 is configured to analyze the received information regarding the created prediction model. Depending on this analyzing step, the communication management unit 40 may generate a warning information in case the created prediction model indicates a critical operational condition of the communication system 20 or parts 23 thereof, e.g. within a predefined upcoming time period.

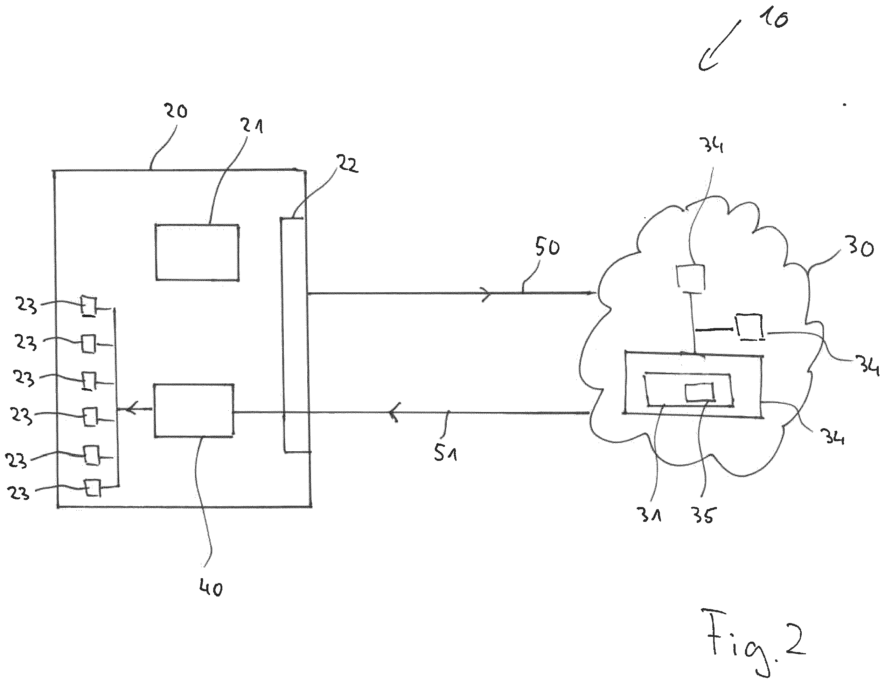

FIG. 2 illustrates a second embodiment of a distributed communication and monitoring system according to the present invention.

In the embodiment shown in Fig. 2, the computing center 30 is a cloud-based data processing center 30 comprising a plurality of distributed servers 34 that are interlinked with each other. This way, the needed high processing and computing capacity is provided.

In Fig. 2, the prediction module 31 comprises a pattern detection module 35 that is configured to detect specific predefined pattern in the received information.

Further, the prediction module 31 is configured to constantly further train the ANN within the pre-trained model 32 based on the received monitoring information.

According to the embodiment of Fig. 2, the communication management unit 40 is part of the communication system 20 so that the back channel 51 from the processing center 30 is directly connected to the interface 22 of the communication system 20.

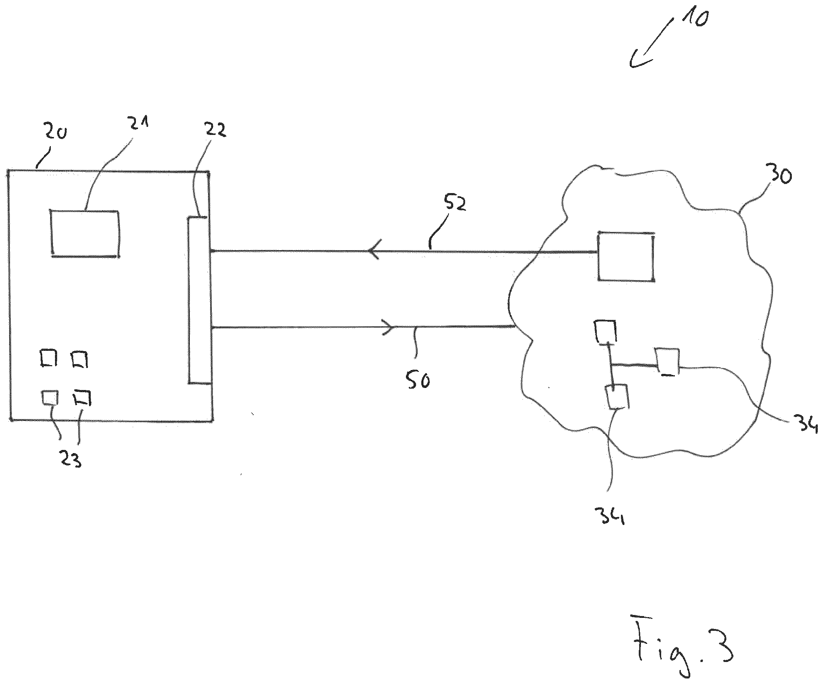

FIG. 3 illustrates a third embodiment of a distributed communication and monitoring system according to the present invention. In this embodiment, the communication management unit 40 is part of the processing center 30.

Hereinafter, the function of the prediction module 31 in combination with the communication management unit 40 is described:
The predictive pre-trained model 32 within the prediction module 31 is a model preferably based on statistical-mathematical methods that is for making suitable user defined predictions of the condition and operation of the communication system 20 and parts 23 thereof. The idea behind it is to use the cloud and artificial intelligence mechanisms within the computing center 30 to enable a prediction in the environment of the communication system 20 in particular for ATC providers, which, in addition to the classic maintenance prediction, i.e. in the direction of predictive maintenance, can provide a prediction of the availability of the used communication channels. So, it goes beyond the normal prediction of device availability and also includes the system architecture of the communication system 20 in order to make an assessment how this communication system 20 will behave in the upcoming weeks and months or the like.

The prediction module 31 receives device status information via a secure connection of the back channel 51, which can contain information such as temperature, runtime, performance data, i.e. how often the device has been operated, at what power and for how long, information about the status of, for example, the voice quality that is transmitted in the communication system 20 and, above all, how this voice quality may develop or change. This information may then be brought in relation to each other by means of artificial intelligence using the pre-trained ANN 32. This way, the present prediction mechanism is employing a machine learning approach rather than an expert system.

Summarizing, the present invention provides a communication system 20, preferably an ATC-based communication system 20, whose operating parameters are collected from the devices 23 to be monitored and sent by a communication management system 40 and via a secure back channel 51 to a suitable evaluation cloud 30. There, this monitoring data is used for modeling to form a prediction model 32. This prediction model 32 is then fed back again using the back channel 51 and used within the framework of this communication management system 40 in order to then make a tangible prediction for the condition und functionality - in particular regarding the probability of failure - of the communication system 20 and/or parts 23 thereof.

Some of the embodiments described above have provided examples in connection with RF based communication systems, such as as ATC, RF components and wireless communications devices thereof. However, the principles and advantages of the embodiments can be used for any other communication systems that could benefit from any of the properties described herein. Although described in the context of RF based communication systems, one or more features described herein can also be utilized in packaging applications involving non-RF components.

Unless the context clearly requires otherwise, throughout the description and the claims, the words "comprise," "comprising," "include", "including" and the like are to be constructed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein", "above", "below", and words of similar content, when used in this application, fall refer to this application as a whole and not to any particular portions of this application. Where the context permits, words in the above detailed description of certain embodiments using the singular or plural number may also include the plural or singular number, respectively. The word "or" in reference to a list of two or more items, covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and same blocks may be deleted, moved, added, subdivided, combined, and/or modified. Each of these blocks may be implemented in a variety of different ways.

Any suitable combination of the elements and acts of the various embodiments described above can be combined to provide further embodiments. The accompanying claims and their equivalents are intended to cover such forms or modifications as would fall within the scope and spirit of the disclosure.

### LIST OF REFERENCE SIGNS

- 10: distributed communication and monitoring system
- 20: communication system, ATC-based communication system
- 21: monitoring module
- 22: interface
- 23: parts/devices/apparatuses/subsystems of the communication system
- 30: computing center, cloud-based data processing center, evaluation cloud
- 31: prediction module
- 32: pre-trained model
- 33: memory
- 34: distributed servers
- 35: pattern detection module
- 40: communication management unit
- 50: communications line
- 51: back channel
- 52: control line

## Claims

1. Distributed communication and monitoring system (10) for a prediction-based operation and monitoring of a communication system (20), in particular for operation and monitoring of an ATC-base communication system (20), the distributed communication and monitoring system (10) comprising:
a communication system (20) comprising a monitoring module (21) and at least one interface (22) wherein the monitoring module (21) is configured to monitor the communication system (20) or parts thereof and to provide monitoring information at the interface (22);
a computing center (30) coupled to the interface (22) and comprising a prediction module (31), wherein the prediction module (31) comprises a pre-trained model (32) of the communication system (20)and is configured to receive the monitoring information via the interface (22), to analyze the received monitoring information using the pre-trained model (32) and to create a prediction model of the communication system (20) based on the analyzed monitoring information; and
a communication management unit (40) coupled to the prediction module (31) via at least one back channel (50) wherein the communication management unit (40) is configured to receive prediction information of the created prediction model and to control operation of the communication system (20) or parts thereof based on the receive prediction information.

2. Distributed communication and monitoring system according to claim 1,
wherein the monitoring module (21) is configured to monitor predefined device functions, device conditions and/or operational parameters of the communication system (20) and/or external conditions and to provide the monitoring information thereof.

3. Distributed communication and monitoring system according to claim 2,
wherein the monitoring information comprises at least one of:
- temperature;
- operation runtime;
- performance data;
- voice quality;
- power consumption;
- output power;
- fan speed;
- transmission quality.

4. Distributed communication and monitoring system according to any of the preceding claims,
wherein the communication system (20) comprises at least one of:
- a VCS simulation system;
- a radio frequency system;
- an IP based system;
- a radar system;
- a direction guiding system;
- a direction finding system;
- a voice quality system.

5. Distributed communication and monitoring system according to any of the preceding claims,
wherein the interface (22) comprises at least one communication interface and/or at least one test interface.

6. Distributed communication and monitoring system according to any of the preceding claims,
wherein the computing center (30) is a cloud-based data processing center (30) comprising a plurality of servers (34).

7. Distributed communication and monitoring system according to any of the preceding claims,
wherein the pre-trained model (32) comprises a trained artificial neuronal network -ANN- that is established and trained on previously provided monitoring information of the communication system (20) and/or based on experience information of the communications system (20) and/or parts (23) thereof.

8. Distributed communication and monitoring system according to claim 7,
wherein the ANN is trained based on machine learning techniques, in particular deep learning.

9. Distributed communication and monitoring system according to claims 7 or 8,
wherein the prediction module (31) is configured to constantly further train the ANN based on the received monitoring information.

10. Distributed communication and monitoring system according to any of the preceding claims,
wherein the prediction module (31) comprises a pattern detection module (35) that is configured to detect specific predefined pattern in the received information.

11. Distributed communication and monitoring system according to any of the preceding claims,
wherein the pre-trained model (32) of the communication system (20) is stored in a memory (33) of the computing center (30).

12. Distributed communication and monitoring system according to any of the preceding claims,
wherein the back channel (51) is configured to enable a secured and/or bidirectional communication between the computing center (30) and the communication management unit (40).

13. Distributed communication and monitoring system according to any of the preceding claims,
wherein the communication management unit (40) is part of the communication system (20) and/or the computing center (30).

14. Distributed communication and monitoring system according to any of the preceding claims,
wherein the communication management unit (40) is configured to analyze the created prediction model and to generate a warning information in case the created prediction model indicates a critical operational condition of the communication system (20) or parts (23) thereof within a predefined upcoming time period.

15. Distributed communication and monitoring system according to claim 14,
wherein the communication management unit (40) is configured to automatically switch-off the communication system (20) or parts (23)thereof after the predefined time period.
